(19) Europäisches Patentamt / European Patent Office / Office européen des brevets

(11) **EP 1 809 521 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(21) Anmeldenummer: **05790967.3**

(22) Anmeldetag: **30.09.2005**

(51) Int Cl.:
**B60T 10/02** (2006.01)  **F16D 33/00** (2006.01)

(86) Internationale Anmeldenummer:
**PCT/EP2005/010562**

(87) Internationale Veröffentlichungsnummer:
**WO 2006/037562 (13.04.2006 Gazette 2006/15)**

(54) **VERFAHREN ZUR ANPASSUNG DER IST-KENNLINIE EINER HYDRODYNAMISCHEN KOMPONENTE AN EINE VORDEFINIERTE SOLL-KENNLINIE BEI DER ENDABNAHME DER HYDRODYNAMISCHEN KOMPONENTEN**

METHOD FOR MATCHING THE ACTUAL CHARACTERISTIC CURVE OF A HYDRODYNAMIC COMPONENT TO A PREDEFINED SET CHARACTERISTIC CURVE DURING THE FINAL TEST OF THE HYDRODYNAMIC COMPONENT

PROCEDE POUR ADAPTER UNE COURBE CARACTERISTIQUE REELLE D'UN CONSTITUANT HYDRODYNAMIQUE A UNE COURBE CARACTERISTIQUE THEORIQUE PREDEFINIE LORS DU CONTROLE FINAL DU CONSTITUANT HYDRODYNAMIQUE

(84) Benannte Vertragsstaaten:
**DE**

(30) Priorität: **02.10.2004 DE 102004048121**

(43) Veröffentlichungstag der Anmeldung:
**25.07.2007 Patentblatt 2007/30**

(73) Patentinhaber: **Voith Turbo GmbH & Co. KG 89522 Heidenheim (DE)**

(72) Erfinder:
• **LAUKEMANN, Dieter 74541 Vellberg (DE)**
• **KLEY, Markus 73479 Ellwangen (DE)**
• **BECKE, Martin 89075 Ulm (DE)**

(74) Vertreter: **Dr. Weitzel & Partner Patentanwälte Friedenstrasse 10 89522 Heidenheim (DE)**

(56) Entgegenhaltungen:
WO-A-00/55520    DE-A1- 19 645 443
DE-A1- 19 751 776    DE-A1- 19 857 535

**Beschreibung**

Die Erfindung betrifft ein Verfahren zur Anpassung einer die Betriebsweise einer hydrodynamischen Komponente charakterisierenden Ist-Kennlinie oder Ist-Kennfeldes an eine vordefinierte oder vorgebbare Soll-Kennlinie oder Soll-Kennfeld bei Endabnahme der hydrodynamischen Komponente.

Hydrodynamische Komponenten werden bei der Fertigung in der Regel einer Endabnahme unterzogen, bei welcher auf dem Prüfstand das mit diesem einstellbare Kennfeld vermessen wird und als starre Kennlinie hinterlegt wird. Dabei wird in der Regel eine Sollwert-Vorgabe durch Kundenanforderung festgelegt, wobei alle hydrodynamischen Komponenten gleichen Bautyps in einem gewissen Toleranzband innerhalb dieser Sollwert-Anforderungen liegen sollten. Die dabei tatsächlich mit der hydrodynamischen Komponente erzielten Ist-Werte werden vermessen und als Kennlinie hinterlegt. Bei sehr starken Abweichungen der erzielten Ist-Werte von den gewünschten Soll-Werten werden konstruktive Nachbearbeitungsmaßnahmen vorgenommen, beispielsweise bei einem hydrodynamischen Retarder durch eine Vergrößerung der Auslassbohrung. Durch die Vorgabe des Toleranzbandes ist es jedoch häufig so, dass die volle zur Verfügung stehende theoretische Bremsleistung gar nicht ausgeschöpft wird. Bei hydrodynamischen Retardern gleichen Typs ergeben sich somit bei gleicher Ansteuerung unterschiedliche realisierbare Bremsmomente.

Zur Kompensation von Alterungserscheinungen im Fertigungsstreuungen ist es beispielsweise zur Optimierung des Umschaltvorganges in Fahrzeuggetrieben, insbesondere automatischen Fahrzeuggetrieben vorbekannt, diese mit einer adaptiven Steuerung auszugestalten. Dabei bewirken elektrohydraulisch betätigbare Reibelemente die Umschaltung zwischen den verschiedenen Übersetzungsstufen. Eine den Schaltvorgang charakterisierende Ist-Größe (vorzugsweise die Schleifzeit, Schaltzeit oder der Drehzahlgradient während der Schleifzeit wird mit einer gespeicherten Sollgröße verglichen, wobei bei Überschreiten einer vorgegebenen Abweichung ein Korrekturwert gespeichert wird. Dieser wirkt dann bei darauffolgenden Schaltvorgängen korrigierend im Sinne einer adaptiven Steuerung auf die Bildung einer Steuergröße für die Reibelemente, vorzugsweise den hydraulischen Druck ein. Dieses Verfahren ist dadurch charakterisiert, dass die adaptive Steuerung erst während des Betriebes erfolgt und somit eine Anpassung erst nach einer bestimmten Betriebszeit möglich ist.

Für hydrodynamische Komponenten in Form hydrodynamischer Kupplungen ist aus EP 1 437 520 A2 ein Verfahren zum Steuern einer automatisch betätigten Kupplung vorbekannt, bei welchem das zu übertragende Drehmoment nach einer Kupplungskennlinie in Abhängigkeit von der Kupplungsposition gesteuert wird und die Kupplungskennlinie zur Kompensation von Änderungen des Kupplungsverhaltens korrigiert wird. Dazu wird die Kupplungskennlinie adaptiert, wofür eine minimal und eine maximal zulässige Kennlinie erzeugt wird und die gültige Kupplungskennlinie in Form einer interpolierten Kennlinie, die entsprechend den Einflussgrößen auf das Kupplungsverhalten adaptiert ist, wird durch Interpolation zwischen den Werten der Minimalkennlinie und denen der Maximalkennlinie berechnet. Mit dieser Art der Regelung wird auf Änderungen der Kupplungseigenschaften durch verschiedene Einflussfaktoren reagiert.

Verfahren zu Steuerung hydrodynamischer Komponenten während des Betriebes sind ferner aus DE 106 45 443 C2 sowie DE 33 35 259 vorbekannt. Bei diesen Ausführungen erfolgt die Anpassung des Ist-Wertes an den Soll-Wert durch Regelung während des Betriebes.

Der Erfindung liegt daher die Aufgabe zugrunde, ein Verfahren zur Anpassung einer die Betriebsweise der hydrodynamischen Komponente charakterisierenden Ist-Kennlinie oder des Ist-Kennfeldes an ein Soll-Kennfeld derart zu entwickeln, dass die Streuungen gegenüber einer gewünschten Soll-Kennlinie oder einem gewünschten Soll-Kennfeld minimiert werden, ohne dass konstruktive Veränderungen erforderlich sind.

Die erfindungsgemäße Lösung ist durch die Merkmale des Anspruchs 1 charakterisiert. Vorteilhafte Ausgestaltungen sind in den Unteransprüchen beschrieben.

Erfindungsgemäß werden die durch Toleranzen bedingten Streuungen in den mittels der hydrodynamischen Komponente erzielbaren Kennlinien oder auch Kennfeldern die Ist-Kennlinie oder auch Ist-Kennfeld, welche die Betriebsweise der hydrodynamischen Komponente wenigstens mittelbar charakterisieren Größen enthalten derart an eine Soll-Kennlinie oder ein Soll-Kennfeld bei der Endabnahme angepasst, dass diese wenigstens im Toleranzbereich der Soll-Kennlinie oder dem Soll-Kennfeld der die Betriebsweise der hydrodynamischen Komponente wenigstens mittelbar beschreibenden Größen der hydrodynamischen Komponente liegen, vorzugsweise diesen direkt entsprechen. Dies wird dadurch gelöst, dass bei einer Endabnahme die aktuell mit der hydrodynamischen Komponente sich ergebende Ist-Kennlinie oder das Ist-Kennfeld bei Durchlaufen des vorzugsweise gesamten Betriebsbereiches mit unterschiedlichen Betriebsanforderungen ermittelt und mit den entsprechenden Betriebspunkten der Soll-Kennlinie oder des Soll-Kennfeldes verglichen wird und bei Abweichung die Stellgröße zur Einstellung der die Betriebsweise charakterisierenden Parameter geändert wird, wobei die Änderung dahingehend erfolgt, dass bei der nächsten Einstellung des entsprechenden Betriebspunktes eine Anpassung bzw. Annäherung an den vorgegebenen oder vordefinierten Sollwert entsprechend der Soll-Kennlinie oder des Soll-Kennfeldes unter Berücksichtigung eines Toleranzbereiches erfolgt. Wird dieser Zustand erreicht, d. h. der aktuell bei einem weiteren Durchlauf erreichte Ist-Wert liegt zumindest im Toleranzbereich des gewünschten Sollwertes oder aber entspricht diesem, wird die Stellgröße als Vorgabewert, d. h. Soll-Stellgröße, für die Einstellung dieses bestimmten Betriebspunktes gesetzt und als Stellgröße zur Erzielung dieses Betriebspunktes gespeichert.

Die erfindungsgemäße Lösung ermöglicht es, auch bei größeren Bauteiltoleranzen zwischen hydrodynamischen Komponenten gleichen Typs im wesentlichen gleiche Kennlinien, die die Betriebsweise charakterisieren, einzustellen und damit gleiche Momente zu übertragen oder zu erzeugen. Dies wird auf einfache Art und Weise durch die entsprechende Kalibrierung des Kennfeldes, insbesondere des Stellgrößen-Kennfeldes, realisiert d. h. die Stellgrößen zur Erzielung eines Betriebspunktes werden für eine hydrodynamische Komponente angepasst. Damit wird eine Verbesserung der Abstimmung zwischen der Steuergröße und der Ausgangsgröße erzielt. Die neuen Soll-Stellgrößen werden dann für die einzelnen Betriebspunkte in Form eines entsprechenden Kennfeldes in einem beschreibund lesbaren Speicher hinterlegt und bilden die Basis für die Ansteuerung bei Einstellung eines Betriebspunktes für den späteren Betrieb der hydrodynamischen Komponente im Einsatzfall. Das so gewonnene Kennfeld wird dabei der hydrodynamischen Komponente vor Einbau im Anwendungsbereich zugeordnet und bildet dabei die Basis für eine möglichst sofortige optimale Betriebsweise. Im einfachsten Fall erfolgt die Hinterlegung in einem der hydrodynamischen Komponente zugeordneten Eigenschaftsspeicher, wobei der Eigenschaftsspeicher entweder

- am Gehäuse der hydrodynamischen Komponente oder
- in der hydrodynamischen Komponente

angeordnet sein kann.

Der Eigenschaftsspeicher selbst kann dabei neben der Speicherung der Kennfelder, insbesondere des Stellgrößen-Kennfeldes, auch noch weitere Eigenschaften, die während der Endabnahme oder aber später auch beim Betrieb der hydrodynamischen Komponente erfasst werden, beinhalten. Dieser Eigenschaftsspeicher beinhaltet ferner eine Kommunikationsschnittstelle, über die dieser mit einem Datenkommunikationsnetzwerk oder einer Steuereinrichtung verbindbar ist. Beim Einsatz in Fahrzeugen werden dann die entsprechenden kennfeldbestimmenden Betriebsparameter bei erster Inbetriebnahme ausgelesen.

Eine weitere Möglichkeit besteht darin, dem hydrodynamischen Retarder selbst eine Steuereinrichtung zuzuordnen. Diese kann dabei entweder

- am Gehäuse oder
- im Gehäuse

des hydrodynamischen Retarders angeordnet werden. Diese Steuereinrichtung dient während des Betriebes dabei der Verarbeitung noch weiterer Soll- und Ist-Werte. Insbesondere bei der Endabnahme bietet diese Möglichkeit den Vorteil, auf eine separate Steuereinrichtung zu verzichten und die eigentliche Anpassung der Kennlinie bereits in der der hydrodynamischen Komponente zugeordneten Steuereinrichtung vorzunehmen. Wird lediglich ein Eigenschaftsspeicher verwendet, ist eine separate Steuereinrichtung zur entsprechenden Kennfeldbearbeitung erforderlich.

Bei der hydrodynamischen Komponente handelt es sich dabei vorzugsweise um einen hydrodynamischen Retarder, umfassend ein Primärrad in Form eines Rotorschaufelrades und ein Sekundärschaufelrad in Form eines feststehenden Statorschaufelrades oder aber eines mit Relativdrehzahl zum Primärschaufelrad rotierenden Schaufelrades. Ferner denkbar ist die Anwendung des erfindungsgemäßen Verfahrens auch bei der Endprüfung hydrodynamischer Kupplungen und hydrodynamischer Drehzahl-/Drehmomentwandler. Beim Einsatz zur Endabnahme von hydrodynamischen Retardern werden dabei die die Betriebsweise charakterisierenden Kennlinien von Drehzahl-/Drehmomentkennlinien übernommen. Die Drehzahl bestimmt sich dabei aus einer die Drehzahl des Rotorschaufelrades wenigstens mittelbar charakterisierenden Größe. Bei dem Drehmoment handelt es sich um das erzeugbare Bremsmoment $M_{Brems}$. Dabei kann je nach gewünschter Bremsleistung entweder das Bremsmoment in Stufen oder aber stufenlos eingestellt werden. Im erstgenannten Fall setzt sich das Kennfeld aus wenigstens einer Kennlinie, vorzugsweise einer Vielzahl von einzelnen, den einzelnen Bremsstufen zugeordneten Kennlinien, zusammen, während im anderen Fall jeder Betriebspunkt zwischen einem vorgegebenen Maximal- und Minimal-Bremsmoment über die Drehzahl angefahren werden kann, wobei jedem einzelnen Betriebspunkt im Kennfeld auch eine entsprechende Stellgröße zugeordnet ist, die zur Einstellung dieses Betriebspunktes führen soll.

Gemäß einer Weiterentwicklung der Erfindung wird immer ein bestimmter Toleranzbereich für ein bestimmtes Kennfeld bzw. eine Kennlinie vorgegeben, wobei diese Grenzwerte vordefinierbar sind. Das Toleranzband, d. h. die Abweichung nach oben und unten von einer Kennlinie beträgt dabei vorzugsweise 20 % von $M_{max}$.

Die Anpassung der Stellgröße erfolgt dabei bei Ermittlung einer Abweichung der die Betriebsweise charakterisierenden Größen, vorzugsweise einer derartigen Größe in einem Betriebspunkt durch Änderung der Stellgröße um einen Korrekturwert k, wobei die Änderung beim nächsten Durchlaufen dieses Betriebspunktes oder aber bei jedem n-ten Durchlauf durch den gleichen gewünschten Betriebspunkt vorgenommen wird. Bei dem Korrekturwert k kann es sich dabei um einen fest vorgegebenen Korrekturwert handeln, der auf die Stellgröße aufgesetzt wird oder aber um einen berechen- oder ermittelbaren Korrekturwert, wobei dabei funktionale Zusammenhänge berücksichtigt werden können. Im einfachsten Fall ist der Korrekturwert eine feste Größe, welche bei Abweichung zum aktuell verwendeten Soll-Wert zur Einstellung der aktuellen Ist-Größen summiert oder subtrahiert wird. Gemäß einer besonders vorteilhaften Ausgestaltung ist eine feinstufigere Abtastung möglich, um den Korrekturwert variabel zu halten, dem diesen in Abhängigkeit der zwischen zwei aufeinanderfolgenden gleichen Betriebszuständen bei mehrmaligem Durchlaufen des gleichen Betriebszustandes ermittelten Werte berechnet wird. Dabei bestimmt sich die Stellgröße $Y_{Soll}$ beispielsweise aus dem Produkt der bei letzter Einstellung des Betriebspunktes festgelegten Stellgröße und dem Quotienten aus dem aktuell ermittelten Ist-Moment und dem Ist-Moment der letzten Einstellung des Betriebspunktes ermittelten Betriebsparameter. Liegen dann die mit dem neuen Sollgrößenwert erzielbaren Betriebsparameter, insbesondere entsprechenden Kennwerte immer noch im Toleranzbereich der Soll-Kennwerte, wird die ermittelte Soll-Stellgröße als neue Soll-Stellgröße für diesen Betriebspunkt gesetzt.

Gemäß einer vorteilhaften Ausgestaltung des erfindungsgemäßen Verfahrens wird bei Abspeicherung der Sollstellgröße jeweils auch noch die sich mit dieser in Abweichung vom Optimalzustand ergebende Toleranz bestimmt, d. h. ermittelt und ebenfalls abgespeichert. Es ergibt sich somit ein mehrdimensionales Kennfeld für die Einstellung der Betriebspunkte, wobei neben der Stellgröße auch die sich mit dieser vom Optimalzustand einstellende Abweichung in den einzelnen Betriebspunkten miterfasst wird und somit die Toleranzgröße als Beurteilungskriterium für weitere Vorgänge zur Verfügung steht.

Die erfindungsgemäße Lösung wird nachfolgend anhand von Figuren erläutert. Darin ist im Einzelnen Folgendes dargestellt:

Figur 1    verdeutlicht in schematisch vereinfachter Darstellung anhand eines Signalflussbildes eine besonders vorteilhafte Ausführung des erfindungsgemäßen Verfahrens;

Figur 2    verdeutlicht in schematisch vereinfachter Darstellung den Grundaufbau eines Prüfstandes zur Umsetzung des erfindungsgemäßen Verfahrens;

Figur 3a    verdeutlicht anhand eines Drehzahl-/Drehmomentdiagrammes das vorgegebene Soll-Kennfeld für einen hydrodynamischen Retarder;

Figur 3b    verdeutlicht das während des Betriebsbereichsdurchlaufs ermittelte Ist-Kennfeld eines hydrodynamischen Retarders;

Figur 3c    verdeutlicht das nach dem erfindungsgemäßen Verfahren vorliegende korrigierte Kennfeld für den hydrodynamischen Retarder mit zusätzlich optionaler Erfassung der Größe der Toleranzabweichung.

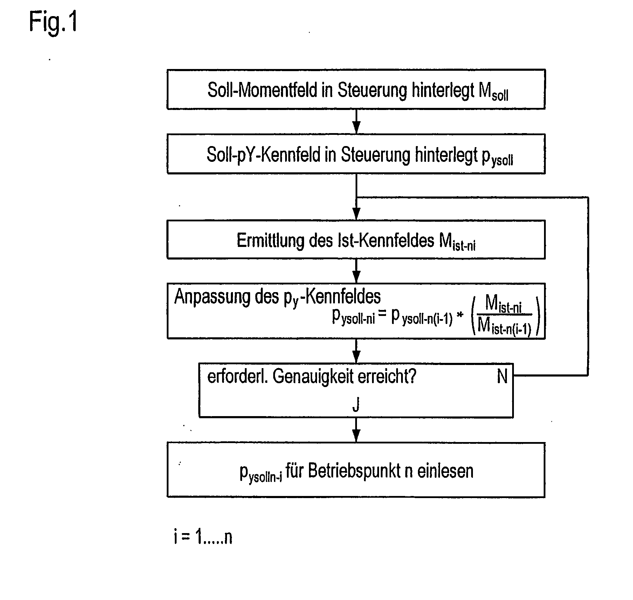

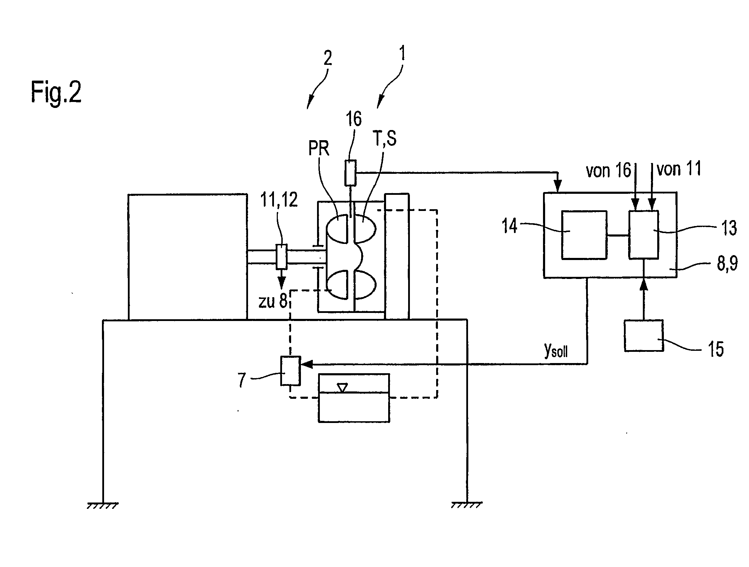

Die Figur 1 verdeutlicht in schematisch vereinfachter Darstellung den Grundablauf eines erfindungsgemäßen Verfahrens zur Begrenzung der Abweichung einer mit einer hydrodynamischen Komponente realisierten die Betriebsweise charakterisierenden Ist-Kennlinie oder eines Ist-Kennfeldes von einer vordefinierten oder vorgegebenen, die Betriebsweise charakterisierenden Soll-Kennlinie oder Soll-Kennfeld bei Endabnahme der hydrodynamischen Komponente 1 in einer Prüfanordnung 2. Die Prüfanordnung 2 ist dabei in Figur 2 in schematisch stark vereinfachter Darstellung hinsichtlich ihrer funktionalen Zusammenstellung wiedergegeben. Der hydrodynamischen Komponente 1 ist ein Betriebsmittelversorgungssystem 3, hier nur mittels unterbrochener Linie dargestellt, zugeordnet. Dieses kann verschiedenartig ausgeführt sein und für die Ausführung am Prüfstand auch nur in Minimalfunktionen erfüllender Version vorliegen. Da die einzelnen Funktionsweisen der hydrodynamischen Komponente 1 in der Regel durch den im Arbeitsraum 4 vorhandenen Füllungsgrad FG und/oder die Druckverhältnisse in den einzelnen Leitungen des Betriebsmittelversorgungssystems 3, insbesondere an mindestens einem Einlass 5 und/oder mindestens einem Auslass 6 aus dem Arbeitsraum 4 ist dieser eine Stelleinrichtung 7 zugeordnet, die ebenfalls je nach Ausführung und Art der Beeinflussung des Übertragungsverhaltens der hydrodynamischen Komponente 1 verschiedenartig ausgeführt sein kann, vorzugsweise in Form einer Ventileinrichtung. Zur Einstellung eines gewünschten, die Betriebsweise beschreibenden Übertragungsverhaltens in Form einer vordefinierten oder vorgegebenen Soll-Kennlinie ist die Stelleinrichtung 7 für jeden einzelnen Betriebspunkt der die Betriebsweise beschreibenden Soll-Kennlinie eine entsprechende Stellgröße Y zugeordnet. Diese ist entweder in einer Soll-Kennlinie für die Stellgröße Y, vorzugsweise in einem Soll-Kennfeld für die Stellgröße $Y_{Soll}$ mit Zuordnung zu einer entsprechenden Betriebspunkten der vordefinierten oder vorgegebenen Soll-Kennlinie für die Betriebsweise der hydrodynamischen Komponente 1 wiedergegeben. Die in Figur 2 dargestellte hydrodynamische Komponente 1 ist als hydrodynamischer Retarder ausgeführt. Diese umfasst ein als Rotorschaufelrad R fungierendes Primärrad P und ein als Statorschaufelrad S fungierendes Sekundärrad T. Das Sekundärrad T steht dabei still. Für jede einzelne hydrodynamische Komponente 1, insbesondere für bau- und leistungsgleiche Typen, existieren vordefinierte oder vorgegebene Soll-Kennlinien für die Betriebsweise, in der Regel in Form von sogenannten Drehzahl-/Drehmomentkennlinien (n-M-Kennlinie). Zur Erzielung dieser Soll-Kennlinien ist dabei jedem Betriebspunkt, d. h. jeder beliebigen Drehzahl, eine entsprechende Stellgröße $Y_{Soll1}$ bis $Y_{Solln}$ zugeordnet. Die Stellgröße $Y_{Soll}$ wird dabei in Abhängigkeit der aktuell vorliegenden Betriebsbedingungen über eine Steuereinrichtung 8, vorzugsweise in Form eines Steuergerätes 9, bereitgestellt. Die Soll-Kennlinie bzw. das Soll-Kennfeld für die Stellgröße $Y_{Soll}$ kann dabei von der Steuereinrichtung 8 je nach Zuordnung zur hydrodynamischen Komponente 1 auch aus einen der hydrodynamischen Komponente 1 zugeordneten beschreibund lesbaren Speicher 10 ausgelesen und der Steuereinrichtung 8 zugeführt werden. Dann kann die Funktion der Steuereinrichtung, insbesondere die Steuereinrichtung 8, von einer beliebigen einer Komponente im Antriebsstrang beim Einsatz in Fahrzeugen zugeordneten Steuereinrichtung oder der zentralen Fahrsteuerung übernommen werden. Für die Prüfanordnung 2 sind dabei eine Einrichtung 15 zur Vorgabe eines gewünschten Bremsmomentes und Erfassungseinrichtung zur Erfassung eine die Ist-Drehzahl $n_{Ist}$ des Primärrades P der hydrodynamischen Komponente 1 wenigstens mittelbar beschreibende Größe in Form einer Erfassungseinrichtung 11 vorgesehen. Diese kann dabei im einfachsten Fall der mit dem Primärrad P verbundenen Welle zugeordnet sein. Diese Erfassungseinrichtung 11 ist beispielsweise in Form eines Sensors 12 ausgeführt, wobei dieser ein Signal für die Steuereinrichtung 8 generiert. Entsprechend dieses Signals wird aus dem in der Steuereinrichtung 8 hinterlegten Soll-Kennlinie für einen bestimmten Betriebszustand des hydrodynamischen Retarders die Stellgröße $Y_{Soll}$ bestimmt und zur Ansteuerung der Stelleinrichtung 7 verwendet. Dabei stellt sich für diese bestimmte Drehzahl n ein bestimmter Momentenwert an der hydrodynamischen Komponente 1 ein, der mit $M_{Ist}$ bezeichnet ist. Dieser oder eine diesen wenigstens unmittelbar, d. h. direkt oder über funktionierende Zusammenhänge oder Proportionalität charakterisierende Größe wird ebenfalls erfasst, beispielsweise mit einer Erfassungseinrichtung 16 und mit dem in der Steuereinrichtung 8 hinterlegten Soll-Kennfeld für die die Betriebsweise wenigstens mittelbar beschreibenden Größen verglichen. Besteht nunmehr eine Abweichung ist erfindungsgemäß vorgesehen, eine Anpassung der Stellgröße $Y_{Soll}$ für diesen Betriebspunkt vorzunehmen und über diese dann das vordefinierte bzw. vorgegebene Soll-Kennfeld oder die einzelne Kennlinie für das einzustellende Moment zu erzielen. Dabei wird die Stellgröße $Y_{Soll}$ für diesen Betriebspunkt geändert. Diese Änderung kann unterschiedlich erfolgen. Im einfachsten Fall kann hier eine Anpassung jeweils um einen Korrekturwert vorgenommen werden, der bei erneute Einstellung des Betriebspunktes jedes Mal neu abgeglichen wird. Vorzugsweise wird diese Vorgehensweise für eine Mehrzahl von Betriebspunkten, vorzugsweise in bestimmten Abständen, beispielsweise Drehzahlabständen oder aber für alle Betriebspunkte gewählt. Im letzten Fall wird dabei jeweils der gesamte Betriebsbereich durchlaufen, der beispielsweise durch einen Drehzahlbereich bestimmt ist. Eine andere Möglichkeit besteht darin, die Stellgröße in Form eines funktionalen Zusammenhanges neu zu ermitteln. Diesbezüglich bestehen ebenfalls mehrere Möglichkeiten. Im einfachsten Fall werden dabei die bereits ohnehin ermittelten Größen vorhergehender Betriebsbereichsdurchläufe für gleiche Betriebspunkte, d. h. die ermittelten Ist-Werte verwendet. Auf eine Möglichkeit diesbezüglich wird in Figur 1 noch genauer eingegangen. Diese Anpassung wird dabei im einfachsten Fall ebenfalls in der Steuereinrichtung 8 vorgenommen. Diese umfasst dazu mindestens noch eine Vergleichseinrichtung 13 sowie eine Sollwert-Korrektureinrichtung 14. Dieser Vorgang wird so lange wiederholt, bis eine erforderliche Genauigkeit erzielt ist. Dies kann beispielsweise durch Vorgabe eines Toleranzbandes für eine bestimmte die Betriebsweise der hydrodynamischen Komponente 1 beschreibbaren Soll-Kennlinie erfolgen. Denkbar ist dabei, das Toleranzband gleichmäßig über die gesamte Kennlinie zu legen oder aber auch in einzelnen Bereichen stärkere Abweichungen zuzulassen. Wird die erforderliche Genauigkeit erzielt, kann dann der jeweils für die einzelnen Betriebspunkte angepasste Sollwert $Y_{soll-neu}$ für die einzelne Stellgröße Y abgespeichert werden, wobei dieses Sollgrößen-Kennfeld für die Stellgröße dann der hydrodynamischen Komponente 1 mit beigegeben wird und für jede x-beliebige Steuerung verwendet werden kann.

Die Figur 1 verdeutlicht dabei noch einmal anhand eines Signalflussbildes das Grundprinzip des erfindungsgemäßen Verfahrens zur Anpassung einer die Betriebsweise einer hydrodynamischen Komponente 1 charakterisierenden Ist-Kennlinie an eine vorgegebene oder vordefinierte Soll-Kennlinie bei der Endabnahme der hydrodynamischen Komponente 1 zum Zwecke der Einstellung im späteren Verwendungsbereich einer Betriebsweise im Bereich der gewünschten Soll-Kennlinie. Zu diesem Zweck wird für einen bestimmten Typ einer hydrodynamischen Komponente 1, beispielsweise eines hydrodynamischen Retarders bestimmter Bauart und Baugröße, ein Soll-Kennfeld, welches die Betriebsweise der hydrodynamischen Komponente 1 beschreibt, in der Steuerung 8 hinterlegt, ferner ein entsprechendes Soll-Stellgrößenkennfeld. Bei dem die Betriebsweise beschreibenden Soll-Kennfeld handelt es sich dabei beispielsweise um ein Soll-Momentenfeld, wobei das Moment beim Retarder durch das Bremsmoment charakterisiert ist. Die einzelnen Momente über den gesamten Betriebsbereich sind dabei mit $M_{Soll1}$ bis $M_{Solln}$ bezeichnet. Jedem Betriebspunkt, insbesondere Soll-Moment im Momentenkennfeld, ist eine entsprechende Stellgröße Y, bei hydrodynamischen Komponenten vorzugsweise in Form eines Stelldruckes $p_Y$ zugeordnet. Das sich daraus ergebende Soll-Stellgrößenkennfeld für $p_{YSoll}$ besteht dabei aus einer Vielzahl einzelner Stellgrößen $P_{YSoll1}$ bis $p_{YSolln}$. Vorzugsweise erfolgt die Korrelation zueinander über eine Drehzahl n. Das Soll-Momentenkennfeld für $M_{Soll1}$ bis $M_{Solln}$ ist dabei in einem Drehzahl/Drehmomentdiagramm abgelegt. Dabei kann das einzelne Kennfeld durch eine Mehrzahl einzelner Kennlinien vorgegeben werden. Vorzugsweise erfolgt die Korrelation über die Drehzahl n am Primärrad P der hydrodynamischen Komponente 1, die je nach Ausführung der hydrodynamischen Komponente als hydrodynamische Kupplung Drehzahl-/Drehmomentwandler oder hydrodynamischer Retarder als Pumpenrad oder Rotorschaufelrad ausgeführt ist. Diese beiden Kennfelder - das Soll-Momentenkennfeld $M_{Soll}$ und das Soll-Stellgrößenkennfeld $p_{YSoll}$ - bilden dabei die Ausgangsbasis. Auf dem Prüfstand bei der Endabnahme wird dann das aktuelle Ist-Momentenkennfeld $M_{Ist}$ ermittelt, wobei dabei eine Vielzahl einzelner Momentenkennwerte $M_{Ist1}$ bis $M_{Istn}$ ermittelt werden, die beispielsweise im Bezug auf die Drehzahl am Primärrad die einzelnen Betriebspunkte im Momentenkennfeld abbilden. Anhand eines Vergleiches des ermittelten Ist-Wertes, im dargestellten Fall des Momentes $M_{Ist}$ mit dem Sollwert $M_{Soll}$ im jeweiligen Betriebspunkt, wird ermittelt, ob dieser dem gewünschten Sollwerte entsprechend dem Soll-Momentenkennfeld entspricht. Ergibt der Vergleich eine Über- oder Unterschreitung des Soll-Wertes $M_{Soll}$ für einen bestimmten Betriebspunkt durch $M_{Ist-i}$, wird die Stellgröße entsprechend angepasst, im dargestellten Fall beispielsweise verringert, während bei Unterschreitung eine Änderung der Stellgröße $Y_{Solln}$ in Richtung einer Vergrößerung erfolgt. Diesbezüglich kann die Stellgröße Y, im dargestellten Fall $py_{Soll}$, lediglich durch Addition oder Subtraktion um einen Korrekturwert, welcher fest vorgegeben, frei definiert oder ermittelt werden kann, geändert werden. Eine andere Möglichkeit entsprechend der Ausführung gemäß Figur 1 besteht darin, hier einen funktionalen Zusammenhang herzustellen, insbesondere zwischen einzelnen für gleiche theoretisch im Soll-Kennfeld anzusteuernden Betriebspunkte ($n_{Istn}$, $M_{Istn}$) sowie Änderungen der Stellgrößen $p_{YSoll}$. Dabei erfolgt beispielsweise für einen bestimmten Betriebspunkt, der durch ein bestimmtes Moment $M_{Ist-n}$ charakterisiert ist und sich über die Stellgröße $p_{YSolln}$ einstellen lässt, beim wiederholten Durchlaufen über den gesamten Betriebsbereich für zwei gleiche einzustellende Betriebspunkte ($n_{Istn}$, $M_{Istn}$) die aufeinanderfolgend ermittelten Werte berücksichtigt. Dabei ergibt sich die neu zu verwendende Stellgröße $p_{YSollneu}$ aus dem Produkt des aktuellen angelegten Stelldruckes $p_{YSolln-(i-1)}$, der dessen vorgegebene Sollwert $p_{YSoll}$ aus der letzten Einstellung des gleichen Betriebspunktes ($n_{Istn}$, $M_{Istn}$) entspricht, und dem Quotienten aus dem aktuellen Moment $M_{Istn(i-1)}$ aus der letzten Ermittlung im gleichen Betriebspunkt. Wird dann immer noch nicht die erforderliche Genauigkeit erreicht, wird die Korrektur weiterhin vorgenommen, d. h. wiederholt während der nächsten Durchläufe des Betriebspunktes n. n charakterisiert dabei einen konkreten Betriebspunkt. i verdeutlicht die Anzahl der wiederholten Einstellung des Betriebspunktes n. Liegt jedoch das dann vorliegende Ist-Moment $M_{Istn-i}$ im Toleranzbereich, kann der dafür verwendete Stellgrößenwert $p_{YSolln-i}$ für diesen Betriebspunkt n eingelesen werden. Dieser wird dann zu $p_{YSollneu}$. Vorzugsweise finden immer eine Mehrzahl derartiger Iterationsschritte statt. Dabei wird für jeden Betriebspunkt n diese Iteration immer betriebspunktbezogen vorgenommen. Dies bedeutet, dass beispielsweise unter der Voraussetzung eines bestimmten Füllungsgrades bei einer bestimmten Drehzahl $n_2$ als Sollwert für Stellgröße $p_{YSoll}$ bei Drehzahl $n_2$ und einzustellenden Drehmoment $M_{Soll}$ bei $n_2$ angesetzt wird und das aktuelle Moment $M_{Ist2}$ bei $n_2$ ermittelt. Weicht $M_{Ist2}$ von dem theoretisch eigentlich einzustellenden Sollwert $M_{Soll2}$ bei Drehzahl $n_2$ ab, erfolgt die Korrektur der Stellgröße $p_{YSoll2}$ bei Drehzahl $n_2$ und $M_{Soll2}$ für Drehzahl $n_2$. Dabei wird der Sollwert für die Stellgröße $p_{YSoll2}$ neu bestimmt, indem dieser aus dem Produkt aus $py_{Ist2}$ bei Drehzahl $n_2$ und dem Quotienten aus dem aus dem aktuellen Ist-Moment $M_{Ist2}$ bei Drehzahl $n_2$ und der letzten Messung $M_{Ist2-(1)}$ bei Drehzahl $n_2$ ermittelt. Wird dann die erforderliche Genauigkeit erreicht, kann dieser neue Sollwert als fest vorgegebener Sollwert für den bestimmten Betriebspunkt n eingelesen werden.

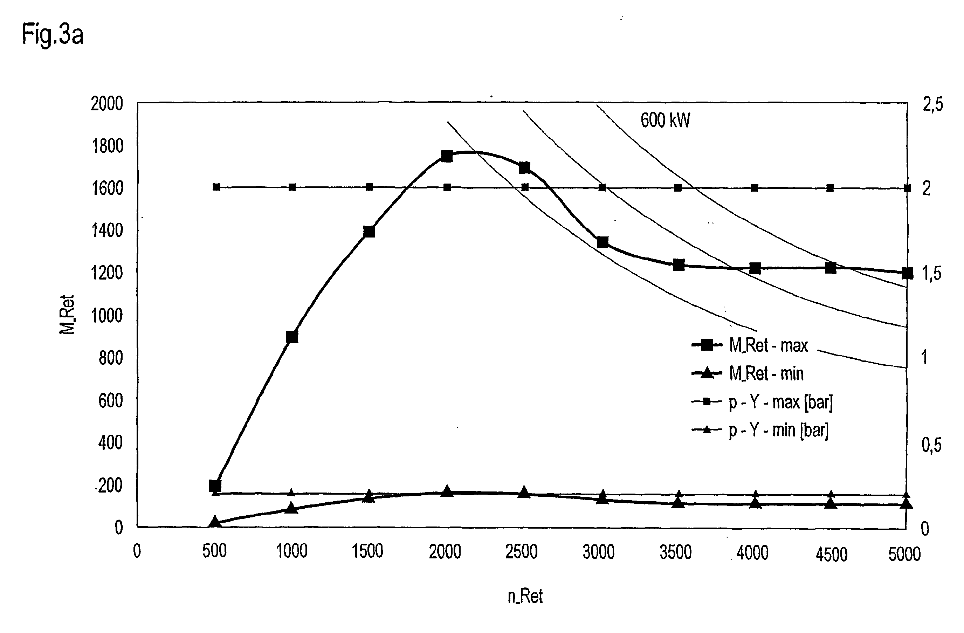

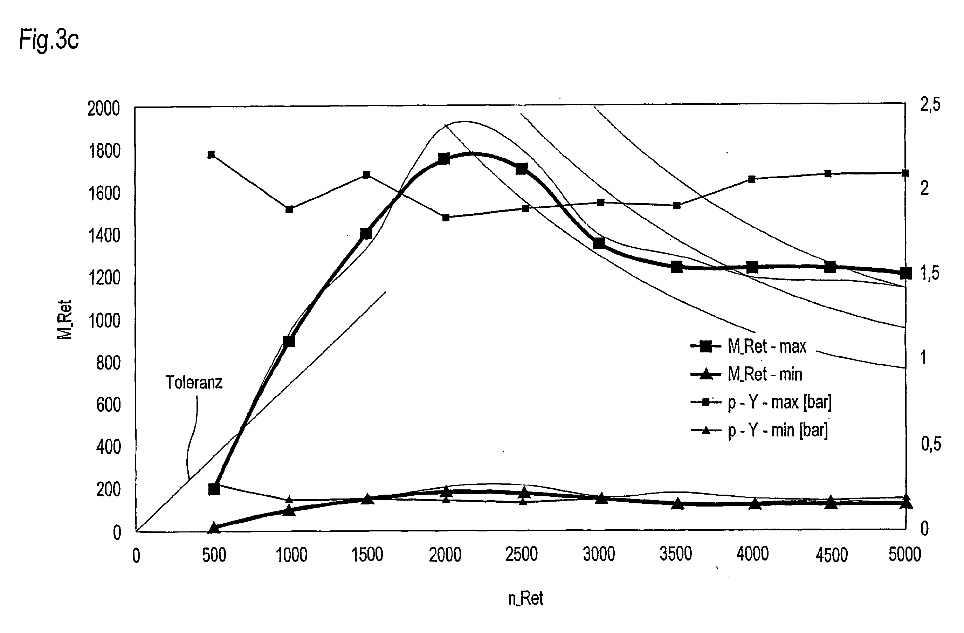

Die Figuren 3a bis 3c verdeutlichen beispielhaft die Anwendung des erfindungsgemäßen Verfahrens bei einem hydrodynamischen Retarder, umfassend ein Primärrad in Form eines Rotorschaufelrades und ein Sekundärschaufelrad. In der Figur 3a ist dabei das bei der Endprüfung zugrundegelegte Soll-Kennfeld für den hydrodynamischen Retarder wiedergegeben. Daraus ersichtlich ist, dass hier im wesentlichen zwei Retarderkennlinien unterschieden werden, die die Erzeugung eines maximalen Bremsmomentes $M_{Ret-max}$ und $M_{Ret-min}$ beschreiben. Dies ist auch immer abhängig vom Füllungsgrad FG des hydrodynamischen Retarders bzw. auch der eingelegten gewünschten Bremsstufe, so dass neben den hier dargestellten zwei unterschiedlichen Kennlinien auch eine Vielzahl derartiger Kennlinien vorgegeben werden kann. Jeder dieser Kennlinien, die hier mit $M_{Ret-max}$ und $M_{Ret-min}$ bezeichnet sind, ist eine entsprechende Stellgrößenkennlinie zugeordnet, die dementsprechend mit $p_{Ymax}$ und $p_{Ymin}$ bezeichnet ist. Die Kennlinien sind im sogenannten Drehzahl-/Drehmomentkennfeld (n/M-Diagramm) wiedergegeben. Die Drehzahl n wird beispielsweise von der Drehzahl des Retarders, insbesondere des Rotorschaufelrades R, beschrieben.

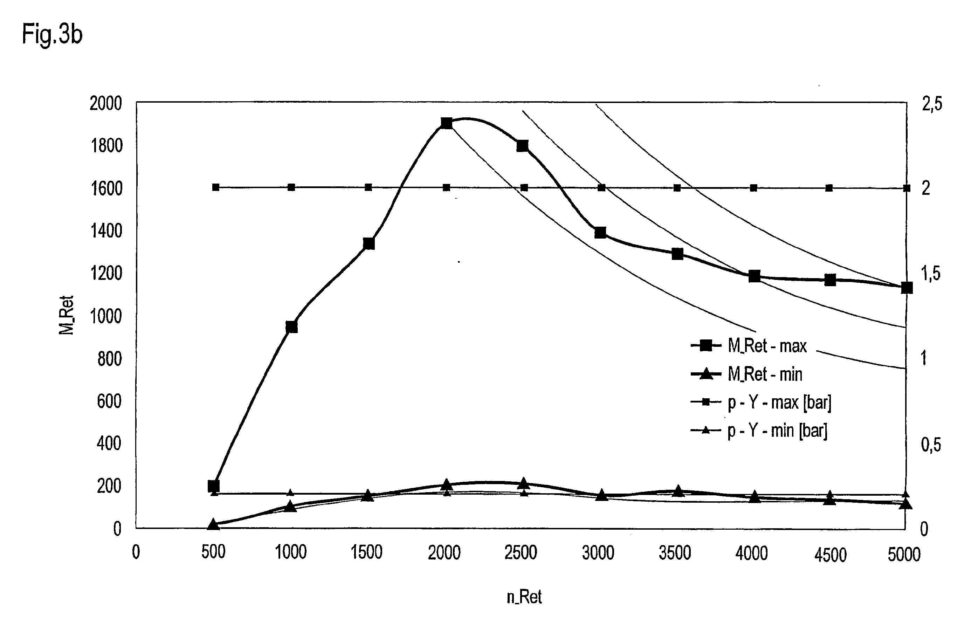

Demgegenüber offenbart Figur 3b das tatsächliche Ist-Kennfeld, wie es sich bei Anlegen der Stellgröße $p_{YSoll}$ für die einzelnen Betriebspunkte ergibt. Daraus zu erkennen ist, dass es doch erhebliche Abweichungen in bestimmten Bereichen jeder einzelnen Ist-Kennlinie von den sogenannten Soll-Kennlinien gibt. Die Korrektur erfolgt über die Anpassung der Stellgröße $p_{YSoll}$, hier im konkreten Fall sowohl der Stellgrößen $p_{Ymax}$ und $p_{Ymin}$, wobei die Korrektur für jeden einzelnen Betriebspunkt vorgenommen wird. Dies gilt in Analogie auch für das minimale vom Retarder erzeugbare Bremsmoment $M_{Ret-min}$.

Das Einlesen der korrigierten Stellgrößen $p_{YSoll}$ neu für die einzelnen Betriebspunkte n erfolgt dabei zumindest in einen beschreibbaren und lesbaren Speicher. Dieser kann der hydrodynamischen Komponente 1, insbesondere dem hydrodynamischen Retarder, beigefügt sein, beispielsweise am Gehäuse angebracht. Denkbar ist es auch, das korrigierte sich aus einer Vielzahl dieser einzelnen Soll-Stellgrößenwerte ergebende Soll-Kennfeld $p_{YSoll}$ in die der hydrodynamischen Komponente 1, insbesondere dem hydrodynamischen Retarder zugeordnete Steuereinrichtung 8, einzulesen.

Zusätzlich aufgetragen sind beispielhaft die tatsächlichen Abweichungen der eingestellten Ist-Betriebspunkte bei Verwendung der abgespeicherten Soll-Stellgröße. Diese Abweichung kann als zusätzliches Bewertungskriterium für nachfolgende Steuervorgänge im Betrieb der hydrodynamischen Komponente herangezogen werden.

Die erfindungsgemäße Lösung ist nicht auf die hier beschriebene Möglichkeit der Änderung der Stellgröße $p_{YSoll}$ beschränkt. Denkbar kann, wie bereits ausgeführt, eine Änderung stufenweise um einen bestimmten vordefinierten oder vorgegebenen Korrekturwert sein. Dieser Korrekturwert kann berechnet werden oder aber frei festgelegt. Dies hängt insbesondere auch damit zusammen, in welchem Abstand derartige Korrekturen erfolgen sollen. Die Korrektur kann bei aufeinanderfolgenden Durchläufen des bestimmten Betriebspunktes oder aber nur bei jeder i-ten Einstellung des Betriebspunktes n erfolgen.

Bezugszeichenliste

| | |
|---|---|
| 1 | hydrodynamische Komponente |
| 2 | Prüfanordnung |
| 3 | Betriebsmittelversorgungssystem |
| 4 | Arbeitsraum |
| 5 | Einlass |
| 6 | Auslass |
| 7 | Stelleinrichtung |
| 8 | Steuereinrichtung |
| 9 | Steuergerät |
| 10 | Speicher |
| 11 | Erfassungseinrichtung |
| 12 | Sensor |
| 13 | Vergleichseinrichtung |
| 14 | Sollwert-Korrektureinrichtung |
| 15 | Einrichtung zur Vorgabe eines gewünschten Bremsmomentes |
| 16 | Einrichtung zur Erfassung einer das Ist-Moment wenigstens mittelbar beschreibenden Größe |

**Patentansprüche**

1. Verfahren zur Anpassung einer die Betriebsweise einer hydrodynamischen Komponente (1) charakterisierenden Ist-Kennlinie oder Ist-Kennfeld an eine die Betriebsweise der hydrodynamischen Komponente charakterisierende Soll-Kennlinie oder Soll-Kennfeld bei der Endabnahme der hydrodynamischen Komponente;
**gekennzeichnet durch** die folgenden Merkmale:

1.1 bei welchem in einer der hydrodynamischen Komponente (1) zugeordneten beschreib- und lesbaren Speichereinheit mindestens eine die gewünschte Betriebsweise der hydrodynamischen Komponente (1) beschreibende Soll-Kennlinie oder ein Soll-Kennfeld hinterlegt wird, wobei jedem in diesem enthaltenen Betriebspunkt (n) eine Soll-Stellgröße ($Y_{Solln}$) zugeordnet ist;
1.2

a) bei welchem aus den die einzelnen Betriebszustände charakterisierenden Betriebsparametern die aktuelle, die Betriebsweise der hydrodynamischen Komponente (1) beschreibende Ist-Kennlinie ermittelt wird und für die einzelne Betriebspunkte (n) mit denen der vorgegebenen Soll-Kennlinie oder dem Soll-Kennfeld verglichen werden, wobei bei Abweichung außerhalb eines vorgebbaren Toleranzbereiches bei wiederholter Ansteuerung des Betriebspunktes (n) eine Korrektur der Soll-Stellgröße ($Y_{Soll}$) für den jeweiligen Betriebspunkt (n) solange vorgenommen wird, bis dieser im Toleranzbereich liegt und
b) bei Abweichung innerhalb des Toleranzbereiches oder Übereinstimmung der aktuelle Wert der Soll-Stellgröße als neuer Sollwert gesetzt wird und in die Speichereinheit als Endwert der Soll-Stellgröße $Y_{Sollneu}$ für jeden Betriebspunkt (n) eingelesen wird.

2. Verfahren nach Anspruch 1, **dadurch gekennzeichnet, dass** die Änderung der Soll-Stellgröße $Y_{Solln}$ für einen bestimmten Betriebspunkt um einen Korrekturwert k erfolgt.

3. Verfahren nach Anspruch 2, **dadurch gekennzeichnet, dass** der Korrekturwert k vordefinierbar oder berechenbar ist.

4. Verfahren nach Anspruch 1, **dadurch gekennzeichnet, dass** die Änderung der einem Betriebspunkt zugeordneten Soll-Stellgröße $Y_{Solln}$ durch Berechnung aus vorangegangenen ermittelten Ist-Größen für den gleichen Betriebspunkt (n) ermittelt wird.

5. Verfahren nach einem der Ansprüche 1 bis 4, **dadurch gekennzeichnet, dass** die Änderung der Soll-Stellgröße ($Y_{Soll}$) bei jedem Durchlaufen des Betriebspunktes (n) erfolgt.

6. Verfahren nach einem der Ansprüche 1 bis 4, **dadurch gekennzeichnet, dass** die Änderung der Soll-Stellgröße $Y_{Soll}$ bei jedem n-ten Durchlaufen des Betriebspunktes (n) erfolgt, wobei n größer 1 ist.

7. Verfahren nach einem der Ansprüche 1 bis 6, **dadurch gekennzeichnet, dass** die Ist- und Soll-Kennlinien der hydrodynamischen Komponente (1) von Drehzahl-/Drehmomentkennlinien (n, M) gebildet werden.

8. Verfahren nach einem der Ansprüche 1 bis 7, **dadurch gekennzeichnet, dass** die zur Einstellung der Betriebspunkte (n) erforderlichen Stellgrößen $Y_{Soll}$ von einem Steuerdruck $p_{YSoll}$ gebildet werden, der der Beaufschlagung der Stelleinrichtung (7) dient.

9. Verfahren nach Anspruch 7 oder 8, **dadurch gekennzeichnet, dass** die geänderte Soll-Stellgröße sich aus folgender Beziehung ergibt:

$$p_{Y\,Soll\,\ln-i} = p_{Y\,Soll\,\ln-(i-1)} \times \left( \frac{M_{Istn-i}}{M_{Istn-(i-1)}} \right)$$

mit

$p_{YSoll\,n-i}$ neue Soll-Stellgröße, der sich bei Abweichung bei aktueller Einstellung des Istwertes $M_{Istn-i}$ vom vorgegebenen Sollwert $M_{Solln}$ als zu setzender Sollwert für die Stellgröße bei der nächsten Ansteuerung des Betriebspunktes n ergibt.

$p_{YSoll\,n-(i-1)}$ Soll-Stellgröße zur Einstellung von $M_{Istn-i}$ verwendet, wie für Betriebspunkt n bei letzter Einstellung ermittelt.

$M_{Istn-i}$ Aktueller Istwert, der mit $p_{YSoll\,n\,(i-1)}$ eingestellt wurde.

$M_{Istn-(i-1)}$ Istwert der bei der letzten Einstellung des Betriebspunktes n ermittelt wurde.

10. Verfahren nach einem der Ansprüche 1 bis 9, **dadurch gekennzeichnet, dass** der Toleranzbereich bezogen auf eine Kennlinie gleichmäßig über die gesamte Kennlinie gewählt ist.

11. Verfahren nach einem der Ansprüche 1 bis 10, **dadurch gekennzeichnet, dass** für jeden mit der abgespeicherten Soll-Stellgröße ermittelten Betriebspunkt die Größe der Abweichung des jeweiligen, den Betriebspunkt beschreibenden Ist-Parameters vom theoretisch einstellbaren Sollwert, d. h. die Größe der Toleranz erfasst und abgespeichert wird.

12. Verwendung eines Verfahrens gemäß einem der Ansprüche 1 bis 11, bei der Endprüfung hydrodynamischer Retarder.

**Claims**

1. A method of adaptation of an actual characteristic curve or actual characteristic field characterising the operating mode of a hydrodynamic component (1) to a theoretical characteristic curve or theoretical characteristic field characterising the operating mode of the hydrodynamic component during the final receipt of the hydrodynamic component; **characterised by** the following features:

   1.1 for which at least one theoretical characteristic curve or one theoretical characteristic field describing the desired operating mode of the hydrodynamic component (1) is set aside in a writable and readable memory unit, which is associated with the hydrodynamic component (1), whereas a theoretical variable (Ysolln) is allocated to each operating point contained therein;

1.2

a) for which the current actual characteristic curve describing the operating mode of the hydrodynamic component (1) is determined from the operating parameters characterising the individual operating modes and for which individually operating points (n) are compared with those of the preset theoretical characteristic curve or with the theoretical characteristic field, whereas in case of deviation outside a presettable tolerance range the theoretical variable (Ysoll) is corrected for the corresponding operating point (n) during repeated actuation of the operating point until said operating point lies in the tolerance range and

b) in case of deviation inside the tolerance range or in case of perfect match of the current value the theoretical variable is set as the new reference value and said value is input into the memory unit as an end value of the theoretical variable Ysollneu for each operating point (n).

2. A method according to claim 1, **characterised in that** the theoretical variable Ysolln is changed by a correction value k for a certain operating point.

3. A method according to claim 2, **characterised in that** the correction value k can be predefined or computed.

4. A method according to claim 1, **characterised in that** the modification of the theoretical variable Ysolln allocated to an operating point is determined by calculation from previously established actual magnitudes for the same operating point (n).

5. A method according to any of the claims 1 to 4, **characterised in that** the theoretical variable (Ysoll) is modified at each passage of the operating point (n).

6. A method according to any of the claims 1 to 4, **characterised in that** the theoretical variable (Ysoll) is modified at each n-th passage of the operating point (n), whereas n is greater than 1.

7. A method according to any of the claims 1 to 6, **characterised in that** the actual characteristic curve and the theoretical characteristic curve of the hydrodynamic component (1) are formed from the revolution speed and torque characteristic curves.

8. A method according to any of the claims 1 to 7, **characterised in that** the adjustment magnitudes Ysoll necessary for adjusting the operating points (n) are formed from a control pressure PYsoll, which is used for actuating the adjustment device (7).

9. A method according to claim 7 or 8, **characterised in that** the modified theoretical variable is deduced from the following relation:

with

PYSOLLI n-i New theoretical variable, which is determined as the reference value to be applied for the adjustment magnitude during the next actuation of the operating point n, in case of deviation during current adjustment of the actual value Mist n-i with respect to the preset reference value Msolln.

PYSOII n-(M) Theoretical variable used for adjusting MIst n-i, as determined for operating point n during the last adjustment.

Current actual value, which was adjusted mit PYsoll (j-1).

MIstn (i-1) Real value, which was determined during the last adjustment of the operating point n.

10. A method according to any of the claims 1 to 9, **characterised in that** the tolerance range is selected uniformly over the whole characteristic curve relative to a given characteristic curve.

11. A method according to any of the claims 1 to 10, **characterised in that** for each operating point established with the stored theoretical variable, the deviation magnitude of the corresponding actual parameter describing the operating point with respect to the theoretically adjustable reference value, i.e. the tolerance interval is established and stored in memory.

12. The use of a method according to one of the claims 1 to 11, during the final control of hydrodynamic retarders.

**EP 1 809 521 B1**

**Revendications**

1. Procédé d'adaptation d'une courbe caractéristique réelle ou d'un diagramme caractéristique réel caractérisant le mode de fonctionnement d'un composant hydrodynamique (1) à une courbe caractéristique théorique ou un diagramme caractéristique théorique caractérisant le mode de fonctionnement du composant hydrodynamique lors de la réception finale du composant hydrodynamique;
présentant les caractéristiques suivantes:

   1.1 on range au moins une courbe caractéristique théorique ou un diagramme caractéristique théorique décrivant le mode de fonctionnement désiré du composant hydrodynamique (1) dans une unité mémoire inscriptible et lisible associée au composant hydrodynamique (1), une variable de réglage théorique (YSolln) étant assignée à chaque point de fonctionnement (n) contenu dans celui-ci;
   1.2

   a) dans lequel on obtient la courbe caractéristique réelle courante décrivant le mode de fonctionnement du composant hydrodynamique (1) à partir des paramètres d'exploitation caractérisant les divers modes de fonctionnement et pour lesquels on compare divers points de fonctionnement (n) avec ceux de la courbe caractéristique théorique prédéterminée ou bien avec le diagramme caractéristique théorique, tandis qu'en présence d'un écart en dehors d'une plage de tolérance que l'on peut prédéfinir on procède à une correction de la variable de réglage théorique (Ysoll) en cas de sollicitation répétée du point de fonctionnement et ce pour chaque point de fonctionnement (n) jusqu'à ce que ledit point de fonctionnement se situe dans la plage de tolérance et
   b) en présence d'un écart à l'intérieur de la plage de tolérance ou en présence d'une coïncidence, on fixe comme nouvelle valeur la valeur courante de la variable de réglage théorique et l'on mémorise cette valeur dans l'unité mémoire comme valeur finale de la variable de réglage théorique Ysollneu pour chaque point de fonctionnement (n).

2. Procédé selon la revendication 1, **caractérisé en ce que** la modification de la variable de réglage théorique Ysolln fait appel à une valeur-de correction k pour un point de fonctionnement définit.

3. Procédé selon la revendication 2, **caractérisé en ce que** la valeur de correction k peut être prédéfinie ou calculée.

4. Procédé selon la revendication 1, **caractérisé en ce que** l'on obtient la modification de la variable de réglage théorique Ysolln associée à un point de fonctionnement par le calcul à partir de grandeurs réelles déterminées précédemment pour le même point de fonctionnement (n).

5. Procédé selon l'une des revendications 1 à 4, **caractérisé en ce que** la modification de la variable de réglage théorique (Ysoll) se produit à chaque passage du point de fonctionnement (n).

6. Procédé selon l'une des revendications 1 à 4, **caractérisé en ce que** la modification de la variable de réglage théorique Ysoll se produit à chaque n-ième passage du point de fonctionnement (n), n étant supérieur à 1.

7. Procédé selon l'une des revendications 1 à 6, **caractérisé en ce que** l'on constitue la courbe caractéristique réelle et la courbe caractéristique théorique du composant hydrodynamique (1) à partir des courbes caractéristiques de vitesse de rotation et de couple (n, M).

8. Procédé selon l'une des revendications 1 à 7, **caractérisé en ce que** l'on constitue les variables de réglage Ysoll nécessaires au réglage des points de fonctionnement (n) à partir d'une pression de commande PYsoll, permettant de solliciter le dispositif de réglage (7).

9. Procédé selon la revendication 7 ou 8, **caractérisé en ce que** la variable de réglage théorique modifiée se déduit de la relation suivante:

   avec
   PYSOLLI n-i Nouvelle variable de réglage théorique, qui se déduit comme valeur de consigne à affecter à la variable de réglage lors de la prochaine sollicitation du point de fonctionnement n et ce, en présence d'un écart par rapport à la valeur de consigne prédéterminée lors du réglage courant de la valeur réelle Mist n-i.
   PYSOII n-(M) Variable de réglage théorique utilisée pour le réglage de M|st n-i, comme déterminée pour le

point de fonctionnement n lors du dernier réglage.

Valeur réelle courante, réglée au préalable avec PYsoll n (j-1).

MIstn (i-1) Valeur réelle, déterminée lors du dernier réglage du point de fonctionnement n.

**10.** Procédé selon l'une des revendications 1 à 9, **caractérisé en ce que** l'on choisit la plage de tolérance de façon uniforme rapportée à une courbe caractéristique, sur toute la courbe caractéristique.

**11.** Procédé selon l'une quelconque des revendications 1 à 10, **caractérisé en ce que** pour chaque point de fonctionnement déterminé à l'aide de la variable de réglage théorique en mémoire, on obtient et on mémorise la dimension de l'écart de chaque paramètre réel décrivant le point de fonctionnement par rapport à la valeur de consigne réglable théoriquement, soit l'intervalle de tolérance.

**12.** Application d'un procédé selon l'une des revendications 1 à 11, lors du contrôle final de retardateurs hydrodynamiques.

Fig.1

```
┌─────────────────────────────────────────────────────┐
│   Soll-Momentfeld in Steuerung hinterlegt M_soll      │
└─────────────────────────────────────────────────────┘
                         │
                         ▼
┌─────────────────────────────────────────────────────┐
│  Soll-pY-Kennfeld in Steuerung hinterlegt p_ysoll     │
└─────────────────────────────────────────────────────┘
                         │
                         ▼
┌─────────────────────────────────────────────────────┐
│      Ermittlung des Ist-Kennfeldes M_ist-ni          │
└─────────────────────────────────────────────────────┘
                         │
                         ▼
┌─────────────────────────────────────────────────────┐
│  Anpassung des p_y-Kennfeldes                        │
│                                                       │
└─────────────────────────────────────────────────────┘
                         │
                         ▼
┌─────────────────────────────────────────────────────┐
│   erforderl. Genauigkeit erreicht?            N       │
│                        J                              │
└─────────────────────────────────────────────────────┘
                         │
                         ▼
┌─────────────────────────────────────────────────────┐
│      p_ysolln-i für Betriebspunkt n einlesen         │
└─────────────────────────────────────────────────────┘
```

$$p_{ysoll\text{-}ni} = p_{ysoll\text{-}n(i\text{-}1)} * \left( \frac{M_{ist\text{-}ni}}{M_{ist\text{-}n(i\text{-}1)}} \right)$$

i = 1.....n

EP 1 809 521 B1

Fig.2

EP 1 809 521 B1

Fig.3a

Fig.3b

Fig.3c

EP 1 809 521 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1437520 A2
- DE 10645443 C2
- DE 3335259